# EUROPEAN PATENT APPLICATION

(11) **EP 3 719 875 A1**
(43) Date of publication of application: **07.10.2020**
(21) Application number: 17933796.9
(22) Date of filing: 19.12.2017
(51) Int. Cl.: H01M 4/04, H01M 4/139, F27B 9/38

(54) **SECONDARY BATTERY POSITIVE ELECTRODE MATERIAL SINTERING APPARATUS AND SINTERING METHOD**

(30) Priority: 01.12.2017 KR 20170164117
(71) Applicant: POSCO, Pohang-si, Gyeongsangbuk-do 37859 (KR)
(72) Inventor: PARK, Kyung Tae, Pohang-si Gyeongsangbuk-do 37859 (KR); NAM, Yong-Ho, Pohang-si Gyeongsangbuk-do 37859 (KR); KIM, Byung-Il, Pohang-si Gyeongsangbuk-do 37859 (KR)
(74) Representative: Potter Clarkson
(86) International application number: PCT/KR2017/015005
(87) International publication number: WO 2019/107651

(57) **Abstract**

To increase production of a cathode material by injecting a large amount of raw material in a annealing furnace, a heating apparatus for a rechargeable battery cathode material including: a transferring line continuously transferring a raw material for a rechargeable battery cathode material; a annealing furnace connected to the transferring line and forming an inner space blocked from an outside to perform heating of the raw material; and a supply unit disposed at an entrance side of the annealing furnace along the transferring line and pressing and supplying the raw material to the annealing furnace, is provided.

## Description

### [Technical Field]

A heating apparatus and a heating method for continuously heating a cathode material for a lithium rechargeable battery are disclosed.

### [Background Art]

In general, lithium rechargeable batteries have high energy density, an excellent output characteristic, and may be lightweight. Accordingly, lithium rechargeable batteries are in the spotlight as an energy storage apparatus for mobile communication devices, hybrid electric vehicles, and home appliances. In recent years, the demand for lithium rechargeable batteries has also increased as the demand for electric vehicles has increased.

The lithium rechargeable battery is largely composed of a cathode material, an anode material, an electrolyte solution, and a separator. Among them, the cost of the cathode material is the largest.

The cathode material production process is largely composed of co-precipitation, heating, and heat treatment processes. The co-precipitation process is a process of producing precursors by injecting metals such as nickel and cobalt. The heating process is a high temperature reaction process in which the precursor and lithium are mixed and heated. The heat treatment process is a process of heat-treating the heated product after coating.

The heating process may be performed using a annealing furnace. The capacity of the annealing furnace is the reference for a capacity design of the process before and after a cathode material production line. In a conventional case, there is a limit in increasing the production capacity of the annealing furnace, and thus it is difficult to increase the production of the cathode material.

The above information disclosed in this Background section is only for enhancement of understanding of the background of the invention, and therefore it may contain information that does not form the prior art that is already known in this country to a person of ordinary skill in the art.

### [Disclosure]

### [Technical Problem]

A heating apparatus and a heating method for a rechargeable battery cathode material capable of further increasing production of a cathode material by injecting a large amount of a raw material into a annealing furnace are provided.

### [Technical Solution]

A heating apparatus of a cathode material according to the present embodiment may include: a transferring line continuously transferring a raw material for a rechargeable battery cathode material; a annealing furnace connected to the transferring line and forming an inner space blocked from an outside to perform heating of the raw material; and a supply unit disposed at an entrance side of the annealing furnace along the transferring line and pressing and supplying the raw material to the annealing furnace.

The supply unit may include a plate disposed on the transferring line with an interval, a mold supplier supplying a mold disposed on the plate, a raw material charging machine charging the raw material inside the mold, and a press pressing the raw material filled in the mold to be compressed.

In the supply unit, the mold supplier, the raw material charging machine, and the press may be sequentially disposed along a moving direction of the raw material of the transferring line.

The heating apparatus may further include a separation unit disposed at an exit side of the annealing furnace along the transferring line and separating the cathode material of which the heating is completed from the plate discharged from the annealing furnace.

The heating apparatus may further include a cleansing unit disposed at the exit side of the separation unit along the transferring line and cleansing the plate.

The transferring line may form a single closed curved line connecting the entrance side and the exit side of the annealing furnace and continuously cycling the plate along the transferring line.

The annealing furnace may be sequentially disposed with a temperature rising zone that increases the temperature of the raw material along the inner passage through which the raw material is moved, a temperature maintaining zone maintaining the temperature, and a cooling zone cooling the raw material, and may include a transferring roll installed along the inner passage to transfer the raw material, a heater installed along the inner passage, and a partition wall installed in each zone.

The annealing furnace may further include an inlet sealing zone installed on the entrance side where the raw material enters and which blocks external air inflow, and an outlet sealing zone installed on the exit side where the cathode material of which the heating is completed is discharged and which blocks external air inflow.

A heating method of a cathode material according to the present embodiment may include: a process of continuously transferring a raw material for the rechargeable battery cathode material along a transferring line; a process of heating the transferred raw material in a annealing furnace; and a process of compressing and supplying the raw material to the transferring line.

The process of compressing and supplying the raw material may include a step of supplying a mold on a plate disposed on the transferring line, charging the raw material in the mold, and pressing the raw material filled in the mold to be compressed.

The process of compressing and supplying the raw material may further include a step of removing the mold after pressing the raw material to be compressed.

The heating method may further include a process of separating the cathode material of which the heating is completed from the plate after the heating process.

The heating method may further include a process of cleansing the plate after separating the cathode material from the plate.

### [Advantageous Effects]

According to the present embodiment, by compressing the raw material to increase its density and supplying it to the annealing furnace, it is possible to increase the production of the cathode material by heating a larger amount of raw material.

In addition, it is possible to prevent contamination of the inside of the annealing furnace due to the raw material.

### [Description of the Drawings]

FIG. 1 is a schematic view showing a configuration of a heating apparatus for a rechargeable battery cathode material according to the present exemplary embodiment.
FIG. 2 is a schematic side cross-sectional view showing a annealing furnace of a heating apparatus for a rechargeable battery cathode material according to the present exemplary embodiment.
FIG. 3 is a schematic view showing a configuration of a supply unit of a heating apparatus for a rechargeable battery cathode material according to the present exemplary embodiment.
FIG. 4 is a graph showing a result of a quality evaluation of a cathode material prepared according to the present exemplary embodiment.
FIG. 5 is a graph showing an increasing result of production of a cathode material produced according to the present exemplary embodiment.

### [Mode for Invention]

The present invention will be described more fully hereinafter with reference to the accompanying drawings, in which exemplary embodiments of the invention are shown, so as to be easily understood by a person with ordinary skill in the art. As easily understood by a person with ordinary skill in the art to which the present invention pertains, the exemplary embodiments which will be described below may be variously modified without departing from the spirit and the scope of the present invention. If possible, the same or similar portions are represented by using the same reference numerals in the drawings.

The technical terms used herein are to simply mention a particular embodiment and are not meant to limit the present invention. An expression used in the singular encompasses an expression of the plural, unless it has a clearly different meaning in the context. In the specification, it is to be understood that the terms such as "including", "having", etc., are intended to indicate the existence of specific features, regions, numbers, stages, operations, elements, components, and/or combinations thereof disclosed in the specification, and are not intended to preclude the possibility that one or more other specific features, regions, numbers, operations, elements, components, and/or groups may exist or may be added.

If not defined differently, all terminologies including technical terminologies and scientific terminologies used herein have meanings that are the same as ones that those skilled in the art generally understand. The terms defined in dictionaries should be construed as having meanings corresponding to the related prior art documents and those stated herein, and are not to be construed as being ideal or official, if not so defined.

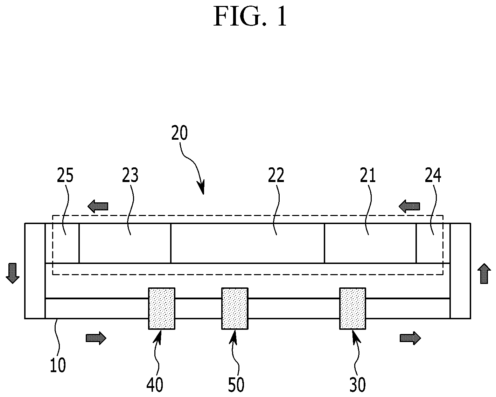

FIG. 1 is a schematic view showing a configuration of a heating apparatus for a rechargeable battery cathode material according to the present exemplary embodiment.

As shown in FIG. 1, a heating apparatus for a cathode material may include a transferring line 10 in which a raw material is continuously transferred, a annealing furnace 20 connected to the transferring line 10 and forming an inner space in which heating of the raw material is performed, and a supply unit 30 disposed at an entrance side of the annealing furnace 20 along the transferring line 10 and supplying the raw material to the annealing furnace 20.

The raw material is continuously supplied to the annealing furnace 20 through the transferring line 10. The raw material is continuously heated while passing through the annealing furnace 20 to be manufactured into the cathode material.

The transferring line 10 may include, for example, a plurality of rollers disposed at an interval. Thus, while the rollers are rotating, an object placed thereon may be moved in a desired direction.

The annealing furnace 20 has an inlet and an outlet connected to the transfer line 10. The annealing furnace 20 is divided into a temperature rising zone 21 for raising the temperature of the raw material along the progression direction of the raw material, a temperature maintaining zone 22 for maintaining the temperature of the raw material, and a cooling zone 23 for cooling the raw material. The entrance and exit sides of the annealing furnace 20 may further include an inlet sealing zone 24 and an outlet sealing zone 25 to block external air inflow. In the following description, the entrance side means a side where the raw material enters along the progression direction, and the exit side means a side where the raw material exits.

When air inflows, the heated raw material has a high impurity content, so the contact of the heated raw material with the air should be suppressed as much as possible. The inlet sealing zone 24 and outlet sealing zone 25 consist of a double door structure on the entrance side and the exit side, and as two doors are alternately opened and closed, the contact between the outside air and the raw material is blocked, such that the outside air is prevented from flowing into the annealing furnace 20. The inlet sealing zone 24 and outlet sealing zone 25 maintain the atmosphere inside the annealing furnace 20 as an oxygen atmosphere. That is, when the door on the entrance side of the inlet sealing zone 24 is opened, the door on the exit side is closed, and when the raw material enters the inlet sealing zone 24 and the door on the entrance side is closed, the door on the exit side is opened. Thus, it is possible to prevent the outside air from flowing into the annealing furnace 20.

Thus, the raw material moved along the transferring line 10 enters the annealing furnace through the inlet sealing zone 24, is heated while passing through the temperature rising zone 21, the temperature maintaining zone 22, and the cooling zone 23, and then passes through the outlet sealing zone 25 to be discharged to the transferring line 10. When the raw material passes through the inlet sealing zone 24, its temperature is raised in the temperature rising zone 21, and the heating occurs at an optimum temperature in the temperature maintaining zone 22. The raw material heated through the cooling zone 23 is naturally cooled, passes through the outlet sealing zone 25, and is discharged from the annealing furnace 20.

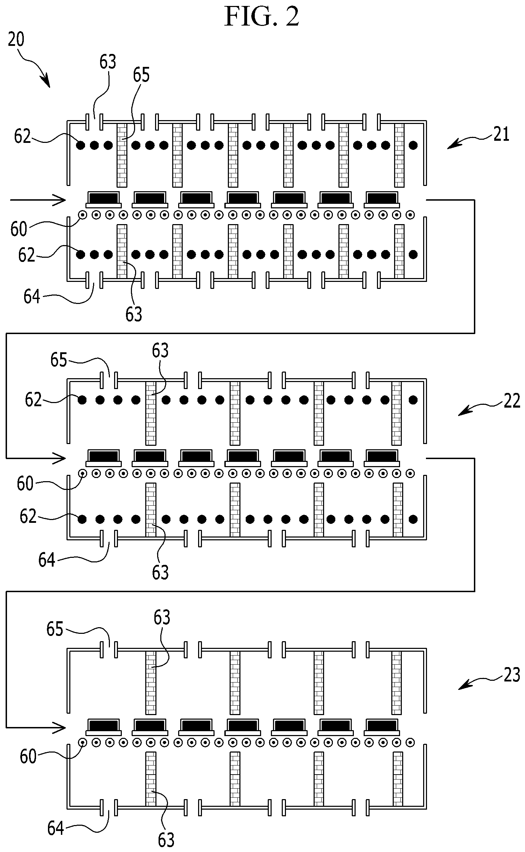

FIG. 2 shows the internal configuration of the annealing furnace 20. As shown in FIG. 2, the annealing furnace 20 may include a transfer roll 60 installed along the inner passage and transferring the raw material, a heater 62 installed along the inner passage, and a partition wall 63 installed in the temperature rising zone 21, the temperature maintaining zone 22, and the cooling zone 23 along the inner passage.

The transferring roll 60 is connected to the transferring line 10 to continuously move the plate moved along the transferring line 10 inside the annealing furnace 20. In the lower part of the annealing furnace 20, a supply port 64 that communicates with the inner passage to supply a gas to the inside is installed, and an outlet 65 through which the gas is discharged is installed in the upper part thereof. In the temperature rising zone 21 and the temperature maintaining zone 22, the heater 62 is installed on the upper and lower sides of the transfer roll 60. The partition wall 63 is installed in each zone to divide the zone into a plurality of regions. The partition wall 63 may be provided to transfer heat energy differently for each section. The interval between the partition walls 63 installed in the temperature maintaining zone 22 is relatively wider than that of the partition walls 63 installed in the temperature rising zone 21 of the annealing furnace 20, and the heating is thereby induced while maintaining the temperature of the raw material. The interval between partition walls 63 installed in the cooling zone 23 may be relatively wider than that of the partition walls 63 installed in temperature maintaining zone 22.

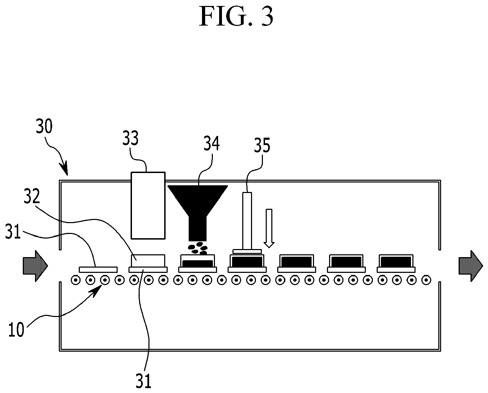

As shown in FIG. 3, the supply unit 30 of the present exemplary embodiment may include plates 31 placed on the transferring line 10 with an interval therebetween, a mold supplier 33 supplying a mold 32 disposed on the plate 31, a raw material charging machine 34 charging the raw material inside the mold 32, and a press 35 pressing the raw material filled in the mold 32 to be compressed.

The plate 31 may have a flat plate structure on which the raw material is placed. The plates 31 are continuously disposed along the transferring line 10 with the interval therebetween. In the present exemplary embodiment, the transferring line 10 may form a single closed curved line connecting the entrance side and the exit side of the annealing furnace 20. The single closed curve line may mean that both ends of the transferring line 10 are connected to the entrance and exit sides of the annealing furnace 20, respectively, thereby meaning to form the closed curved line in a form of a caterpillar. Thus, while the plates 31 are continuously supplied from the supply unit 30 while circulating through the annealing furnace 20 along the transfer line 10, the cathode material is produced.

The mold supplier 33 is positioned above the transferring line 10 to provide the mold 32 on the plate 31 on the transferring line 10. The mold 32 may be, for example, a lattice-type frame structure composed of four side plates. The mold 32 is sufficient to maintain its shape when compressing the raw material, and may be modified into various shapes. The mold 32 may be transferred to the annealing furnace 20 together with the raw material in the state that the raw material is compressed therein. In the case of such a structure, the outer side of the raw material is surrounded by the mold 32, thereby effectively preventing internal contamination of the annealing furnace 20 due to the raw material. The mold 32 may be formed of a material with high thermal conduction efficiency. In addition, the mold 32 may be formed with as thin a thickness as possible. Accordingly, heat is effectively transferred to the raw material through the mold 32, thereby increasing the raw material heating efficiency. In the present exemplary embodiment, the mold 32 may be removed from the compressed raw material after the raw material is compressed. In the case of such a structure, the heat transfer is better with the raw material inside the annealing furnace 20, so that a heating time may be shortened and the energy cost may be further reduced.

The raw material charging machine 34 is disposed above the transferring line 10 and supplies the raw material into the mold 32 placed on the plate 31. The press 35 is disposed above the transferring line 10, and is driven up and down to press and compress the raw material charged in the mold 32. Thus, the raw material is compressed in the mold 32, thereby reducing the volume and increasing the density. The volume of the raw material is reduced, so that a large amount of raw material may be supplied to the annealing furnace by stacking compressed raw materials in the same area. Therefore, more raw material may be introduced as compared to the uncompressed raw materials into the annealing furnace 20 of the same capacity, thereby heating the larger amount of the raw material to increase the production of the cathode material.

In the present exemplary embodiment, in the supply unit 30, the mold supplier 33, the raw material charging machine 34, and the press 35 are sequentially disposed along the moving direction of the raw material of the transferring line 10. For example, the mold supplier 33, the raw material charging machine 34 and the press 35 may be sequentially disposed at an interval corresponding to the interval of the plate 31 disposed on the transferring line 10. Thus, while the plate 31 moves along the transferring line 10 and sequentially passes through the mold supplier 33, the raw material charging machine 34, and the press 35, and the raw material is finally pressed on the plate 31 in the mold 32.

The heating apparatus of the present exemplary embodiment may further include a separation unit 40 disposed at the exit side of the annealing furnace 20 along the transferring line 10 and separating the cathode material of which the heating is completed from the plate 31 discharged from the annealing furnace 20. Also, the heating apparatus may further include a cleansing unit 50 disposed at the exit side of the separation unit 40 along the transferring line 10 and cleansing the plate 31.

The separation unit 40 separates the cathode material from the plate 31. In the present exemplary embodiment, the separation unit 40 is a structure that inverts the plate 31 by clamping both ends of the plate 31, and may be a structure in which the cathode material is dropped by a self-weight from the plate 31. In addition to this structure, the separation unit 40 may be made as various structures, for example, a structure that pushes the cathode material out of the plate 31. The cathode material separated from the plate 31 may be transferred to a subsequent process.

The cleansing unit 50 is for cleaning the surface of the plate 31 after the cathode material is separated. As there are many heated raw materials on the plate 31, the plate 31 should be cleansed for the next use. In the present exemplary embodiment, the cleansing unit 50 may have a structure in which a brush or scraper comes in close contact with the surface of the plate 31 to wipe away the heated raw material and the like on the surface of the plate 31.

The plate 31, after passing through the separation unit 40 and the cleansing unit 50, is transferred back to the supply unit 30 along the transfer line 10 to be reused.

Hereinafter, the heating process of the cathode material according to the present exemplary embodiment is described.

The raw material continuously supplied along the transferring line 10 is heated while passing through the annealing furnace 20 and is made of the cathode material. To supply the raw material, the mold 32 is first supplied on the plate 31 placed on the transferring line 10. Then, after charging the raw material into the mold 32, the raw material filled in the mold 32 is pressed and compressed. Thus, the raw material is compactly compressed to a high density with the reduced volume in the mold 32. In this state, the raw material is charged to the annealing furnace 20 and then is formed into the cathode material through the heating process. If necessary, after removing the mold 32 from the compressed raw material, only the raw material may be supplied to the annealing furnace 20 to be heated. The cathode material discharged to the exit side of the annealing furnace 20 is separated from the plate 31 through the separation unit 40. Then, the plate 31 from which the cathode material has been separated is cleanly removed from the raw material on the surface while passing through the cleansing unit 50 and then transferred to the supply unit 30 to be reused.

As the plate 31 continues to circulate along the transferring line 10, the above-described process is repeated to continuously heat the raw material.

As described above, by pressing the raw material in the mold 32 to reduce the volume and increase the density to be supplied to the annealing furnace 20, more raw material may be introduced into the annealing furnace 20. Accordingly, it is possible to increase the cathode material production by heating a larger amount of the raw material through the annealing furnace 20 of the same capacity.

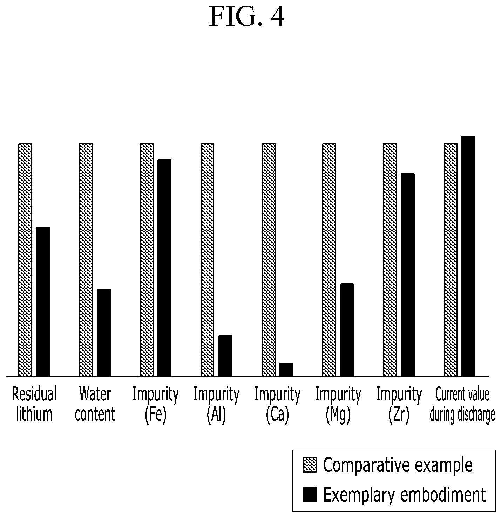

FIG. 4 is a graph showing a result of a quality evaluation of a cathode material prepared according to the present exemplary embodiment.

According to the present exemplary embodiment, qualities of items such as a residual lithium content, a water content, an impurity content (Fe, Al, Ca, Mg, Zr), and a current value during discharge are evaluated for the heated cathode material. The lower the residual lithium content, water content, and impurity content, the better, and the higher the current value during discharge, the better.

As shown in FIG. 4, it may be confirmed that the cathode material manufactured according to the present exemplary embodiment meets the reference value for all quality evaluation items, so that there is no problem in quality.

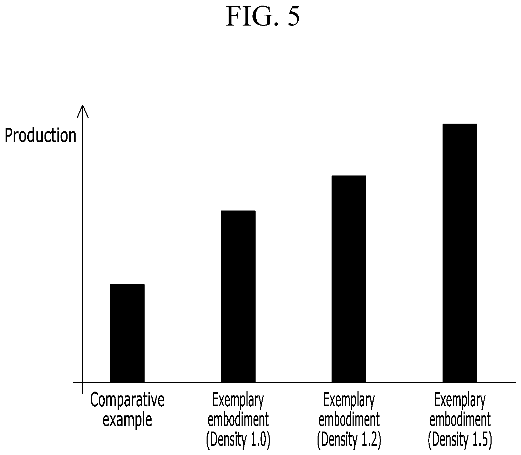

FIG. 5 is a graph showing an increasing result of production of a cathode material produced according to the present exemplary embodiment.

In FIG. 5, a comparative example shows the production of the cathode material produced by heating the raw material as it is without being pressed, and an exemplary embodiment shows the production of the cathode material when performing the heating by compressing the raw material to increase the density as mentioned above.

As an experiment result, as shown in FIG. 5, in the case of the exemplary embodiment compared with the comparative example, it is possible to increase the production by increasing the supply density of the raw material. The production of the cathode material is shown to be proportional to the density of the raw material, and the density of the raw material may be increased to further increase the production.

That is, when the cathode material is manufactured according to the present exemplary embodiment, the heat transfer to the raw material compressed on the plate 31 is improved and the density is increased by pressing the raw material, thereby heating a larger amount of the raw material in the annealing furnace 20.

As described above, exemplary embodiments of the present invention have been illustrated and described, but various modifications and other exemplary embodiments may be performed by those skilled in the art. The modifications and the other exemplary embodiments are all considered to be included in the appended claims, which fall within the spirit and scope of the present invention.

## Claims

1. A heating apparatus for a rechargeable battery cathode material, comprising:
a transferring line continuously transferring a raw material for a rechargeable battery cathode material;
a annealing furnace connected to the transferring line and forming an inner space blocked from an outside to perform heating of the raw material; and
a supply unit disposed at an entrance side of the annealing furnace along the transferring line and pressing and supplying the raw material to the annealing furnace.

2. The heating apparatus of claim 1, wherein
the supply unit includes a plate disposed on the transferring line with an interval, a mold supplier supplying a mold disposed on the plate, a raw material charging machine charging the raw material inside the mold, and a press pressing the raw material filled in the mold to be compressed.

3. The heating apparatus of claim 2, wherein
in the supply unit, the mold supplier, the raw material charging machine, and the press are sequentially disposed along a moving direction of the raw material of the transferring line.

4. The heating apparatus of claim 2 or claim 3, wherein
the heating apparatus further includes a separation unit disposed at an exit side of the annealing furnace along the transferring line and separating the cathode material to which the heating is completed from the plate discharged from the annealing furnace.

5. The heating apparatus of claim 4, wherein
the heating apparatus further includes a cleansing unit disposed at the exit side of the separation unit along the transferring line and cleansing the plate.

6. The heating apparatus of claim 5, wherein
the transferring line forms a single closed curve line connecting the entrance side and the exit side of the annealing furnace and continuously cycles the plate along the transferring line.

7. The heating apparatus of claim 6, wherein
the annealing furnace is sequentially disposed with a temperature rising zone that increases the temperature of the raw material along the inner passage through which the raw material is moved, a temperature maintaining zone maintaining the temperature, and a cooling zone cooling the raw material, and includes a transferring roll installed along the inner passage to transfer the raw material, a heater installed along the inner passage, and a partition wall installed in each zone.

8. The heating apparatus of claim 7, wherein
the annealing furnace further includes an inlet sealing zone installed on the entrance side where the raw material enters and blocks external air inflow and an outlet sealing zone installed on the exit side where the cathode material of which the heating is completed is discharged and blocks external air inflow.

9. A heating method of a rechargeable battery cathode material, comprising:
a process of continuously transferring a raw material for the rechargeable battery cathode material along a transferring line;
a process of heating the transferred raw material in a annealing furnace; and
a process of compressing and supplying the raw material to the transferring line.

10. The heating method of claim 9, wherein
the process of compressing and supplying the raw material includes a step of supplying a mold on a plate disposed on the transferring line, and a step of charging the raw material in the mold and pressing the raw material filled in the mold to be compressed.

11. The heating method of claim 10, wherein
the process of compressing and supplying the raw material further includes a step of removing the mold after pressing the raw material to be compressed.

12. The heating method of claim 10 or claim 11, wherein
the heating method further includes a process of separating the cathode material of which the heating is completed from the plate after the heating process.

13. The heating method of claim 12, wherein
the heating method further includes a process of cleansing the plate after separating the cathode material from the plate.
